# EUROPEAN PATENT SPECIFICATION

(11) **EP 2 631 183 B1**
(45) Date of publication and mention of the grant of the patent: **21.01.2015**
(21) Application number: 10795404.2
(22) Date of filing: 21.10.2010
(51) Int. Cl.: B64G 1/50, F28D 15/02, F28D 15/06, F28F 27/02

(54) **PRESSURE CONTROLLED THERMAL CONTROL DEVICE**
DRUCKGESTEUERTE VORRICHTUNG ZUR THERMALKONTROLLE
DISPOSITIF DE CONTROLE THERMIQUE COMMANDE PAR LA PRESSION

(43) Date of publication of application: 28.08.2013
(73) Proprietor: Ibérica del Espacio, S.A., 28015 Madrid (ES)
(72) Inventor: MISHKINIS, Donatas, E-28010 Madrid (ES); TORRES SEPÚLVEDA, Alejandro, E-28010 Madrid (ES)
(74) Representative: Hano, Christian
(86) International application number: PCT/ES2010/070677
(87) International publication number: WO 2012/052573

(56) References cited:
- WO-A1-2010/037872
- JP-A- 1 252 898
- SU-A1- 916 956
- DATABASE WPI Week 200616 Thomson Scientific, London, GB; AN 2006-148461 XP002648041, -& JP 2006 029672 A (DOKURITSU GYOSEI HOJIN UCHU KOKU KENKYU) 2 February 2006 (2006-02-02)

## Description

### FIELD OF THE INVENTION

The present invention relates to a thermal control device which is regulated by pressure for controlling a heat source temperature, particularly for use on a spacecraft.

### BACKGROUND OF THE INVENTION

Most of the components and subsystems of a spacecraft must operate in restricted temperature ranges. This makes thermal control a key matter in the design and operation of a spacecraft with a significant weight, power and cost impact in the overall spacecraft budgets.

Spacecraft thermal control relies on the global spacecraft thermal balance: the heat loads must be rejected to deep space that works as a thermal sink. Since no matter links this sink and the spacecraft, this rejection is made by thermal radiation through dedicated radiators installed on the satellite external surfaces.

Spacecraft thermal loads come from the internal spacecraft equipment dissipation and, externally, from the sun and the earth or from the celestial bodies around which the spacecraft orbits. The thermal systems used in spacecrafts must therefore be able to control equipment which operates at a high temperature and also discontinuously.

At present, known thermal devices for controlling thermal loads in spacecraft are two phase heat transfer loops, which are also known in engineering practice as loop heat pipes, capillary pumped loops, mechanically pumped loops or heat loops, as for example those shown in PCT/ES2008/070181. The purpose of these known two phase heat transfer loops is to transfer heat between a heat source (for instance, an electronic element) and a heat sink (for instance, a cold plate). A two phase heat transfer loop is a closed, hermetically sealed circuit, which is partially filled by working fluid, which is called heat carrier. During nominal operation of the two phase heat transfer loop, two phases of this working fluid, vapour and liquid, are always present in the circuit.

Known two phase heat transfer loops usually comprise at least four elements: an evaporator, a vapour transport line, a condenser and a liquid transport line. It is also frequent that these systems also comprise a bypass line with a bypass valve, which provides temperature control to the two phase heat transfer loop by effecting a bypass of part of the fluid flow. In order to provide a constant circulation of the working liquid in the circuit, different mechanisms or pumps are used in the two phase heat transfer loops, such as capillary pumps (which are the most commonly used, since they do not need any source of energy to work), mechanical pumps or hydrodynamic pumps.

By definition, the two phase heat transfer loop is a heat conductor, its conductance value being close to constant in the major part of its operational temperature range. However, for many applications, it is necessary to provide in these devices a temperature control function in order to avoid overcooling the heat source (spacecraft thermal loads). This means that the conductance of the two phase heat transfer loop has to be variable, since it has to degrade at low operational temperatures in order to provide significant temperature difference between the evaporator and the condenser.

A typical example showing the need of the conductance of the two phase heat transfer loop being variable is the cooling of spacecraft onboard electronics where two phase heat transfer loops are widely used for transferring heat from the inside part of the satellite or spacecraft to the external radiators. In certain conditions of the spacecraft operation (called cold case), the temperature of the radiator can reach very low values, which can lead to cooling the electronics equipment below its acceptable temperature limit, since this electronics equipment has a good thermal connection with the radiator via the two phase heat transfer loop.

To avoid this situation, different techniques can be used. For instance, a widely common approach is the installation of special survival heaters on the two phase heat transfer loop, on the radiator or on the electronics equipment. However, in these known solutions, an additional electrical power is needed and the survival heaters power consumption can often be significant in comparison with the total power budget of the satellite.

Another known method comprises the installation in the vapour line of the two phase heat transfer loop of a special three-way pressure regulating valve, which effects the vapour (heat) flow redistribution between the condenser and the bypass line. This method is passive and does not need any power source. The temperature control in these systems is effected by way of directly applying heat to the two phase heat transfer loop in order to change its conductance.

However, the main drawback of these three-way regulating valves is the following: in the case of even a small vapour flow leakage rate into the bypass line, the performance (conductance) of the two phase heat transfer loop degrades at operational regimes where the bypass line is closed and the two phase heat transfer loop is working as a regular two phase heat transfer loop without the three-way regulating valve. This means that there exists the possibility of the heat source overheating above an acceptable limit, since the temperature difference between the evaporator and the condenser increases. It is also difficult to guarantee the leakage absence, since the typical material for the evaporator capillary structures is metallic powder and the particles of the powder can appear and migrate in the loop during the two phase heat transfer loop operation. These particles can deposit on the valve stem and seat, causing the vapour leak into the bypass line.

It shall then be desirable to provide a thermal control device for controlling the temperature of a heat source that overcomes the mentioned drawbacks, and that provides a reliable and effective temperature control.

Each of JP 2006 029672 A, JP 1 252898 A, SU 916 956 A1 and WO 2010/037872 A1 discloses a thermal control device for controlling the temperature of a heat source by means of transferring heat from the heat source to a heat sink by means of the circulation of a fluid in the device, said device comprising an evaporator collecting heat from the heat source, a condenser rejecting heat to the heat sink, and transport lines connecting the evaporator and the condenser, the fluid flowing through said transport lines. The device further comprises a valve located in one of the transport lines, said valve opening and closing the flow of fluid in the transport line modifying the hydraulic resistance of said transport line. The pressure drop in the circuit of transport lines - valve - condenser is such that it enables to maintain the evaporator operation temperature substantially within a predetermined value, independent on the condenser temperature.

### SUMMARY OF THE INVENTION

The object of the invention is to provide a thermal control device for controlling a heat source temperature, particularly for use on a spacecraft for controlling the temperature of onboard electronic equipment (that plays the role of heat source), in which the control of the temperature of the heat source is effected by means of the variation of the device hydraulic resistance, i.e., of the pressure drop of the fluid circuit in the device.

This object is achieved by a thermal control device comprising the features of claim 1. Preferred embodiments of the thermal control device of the invention are claimed in claims 2 to 6.

According to the invention, the thermal control device comprises an evaporator, a vapour transport line, a condenser, a liquid transport line and a two-way regulating valve. In the device of the invention, the temperature control is effected by means of the two-way regulating valve, that simplifies the design of the three-way regulating valves currently used, eliminating the need of the use of a bypass line in the thermal fluid circuit. The two-way regulating valve used in the device of the invention is able to automatically adjust the hydraulic resistance of the circuit by adjusting the hydraulic resistance of either the vapour transport line or the liquid transport line. The two-way regulating valve of the invention acts on the hydraulic resistance of the transport line (either vapour or liquid line) by means of acting on the flow of fluid through it, by opening or closing the transport line in which the valve is situated, thus varying the pressure difference between the vapour and the liquid parts in the evaporator of the thermal control device, which acts on the temperature control of the device. In this way, according to the invention, the temperature of the evaporator is maintained close to constant and independent on the condenser temperature when the two-way regulating valve is located in either the vapour or the liquid transport line. The valve further comprises a heater for effecting an active control of the evaporator temperature.

Other features and advantages of the present invention will be disclosed in the following detailed description of illustrative embodiments of its object in relation to the attached figures.

### DESCRIPTION OF THE DRAWINGS

The features, objects and advantages of the invention will become apparent by reading this description in conjunction with the accompanying drawings, in which:
Figure 1 shows a schematic view of a two phase heat transfer loop for controlling the temperature of a heat source in a spacecraft according to the prior art.
Figure 2 shows a schematic view of a two phase heat transfer loop for controlling the temperature of a heat source in a spacecraft, comprising a bypass line and a three-way regulating valve, according to the prior art.
Figure 3 shows a schematic view of a three-way regulating valve of the two phase heat transfer loop for controlling the temperature of a heat source in a spacecraft of Figure 2.
Figure 4 shows a schematic view of a thermal control device for controlling the temperature of a heat source, according to the present invention.
Figure 5 shows a schematic view of a first embodiment of a two-way regulating valve of the thermal control device for controlling the temperature of a heat source of Figure 4.
Figure 6 shows a schematic view of a second embodiment of a two-way regulating valve of the thermal control device for controlling the temperature of a heat source of Figure 4.
Figure 7 is a functional diagram showing the variations of pressure and temperature in the operation of the thermal control device for controlling the temperature of a heat source, according to the present invention.
Figure 8 shows experimental temperature data of a thermal control device for controlling the temperature of a heat source, according to the present invention.

### DETAILED DESCRIPTION OF THE INVENTION

The invention is therefore intended to provide a thermal control device 1 for controlling the temperature of a heat source, particularly for use on a spacecraft, controlling the temperature of onboard electronic equipment.

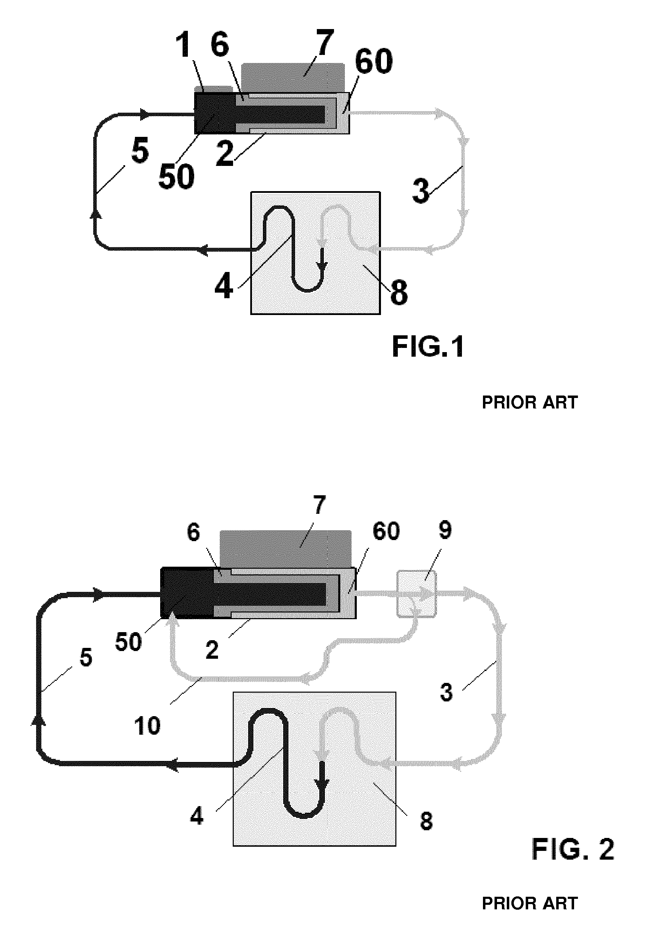

Known heat transfer devices according to the prior art (see for example Figures 1 or 2), comprise an evaporator 2, collecting the heat from a heat source 7 and being connected to said heat source 7, a vapour transport line 3, which is the heat transport artery of the heat transfer device, a condenser 4, rejecting the heat and being connected to a heat sink 8, and a liquid transport line 5, which is the working fluid return artery in the device.

As it is shown in **Figure 1****,** these known heat transfer devices comprise, as distinguishing feature, a porous structure 6 in the evaporator 2. This structure 6 separates the phases of liquid 50 and vapor 60 in the device when it operates. This porous structure 6 can also have the function of the liquid returning pump if the fluid pressure drop in the device becomes lower than the porous structure 6 capillary potential, which is defined by the Young-Laplace equation.

In the device of Figure 1, heat is taken from the heat source 7 by the evaporation of liquid from the porous structure 6. Due to the presence of positive temperature drop between the heat source 7 and the heat sink 8, vapour moves to the condenser 4 through the vapour transport line 3. Then, heat is released to the heat sink 8 by the process of vapour condensation in the condenser 4. Finally, the condensed liquid is returned to the evaporator 2 with the help of a porous structure-capillary pump or other type of pump (not shown). The loop in this device is therefore closed. The active temperature control of the heat source 7 can be performed by a heater 1 installed on the liquid part 50 of the evaporator 2 (see Figure 1).

Another known heat transfer device is that shown in Figure 2, that comprises a three-way regulating valve 9 and a bypass line 10, the three-way regulating valve 9 being installed in the vapour transport line 3 (it can not be installed in the liquid transport line), and effecting the vapour (heat) flow redistribution between the condenser 4 and the bypass line 10. This method is passive and does not need any power source.

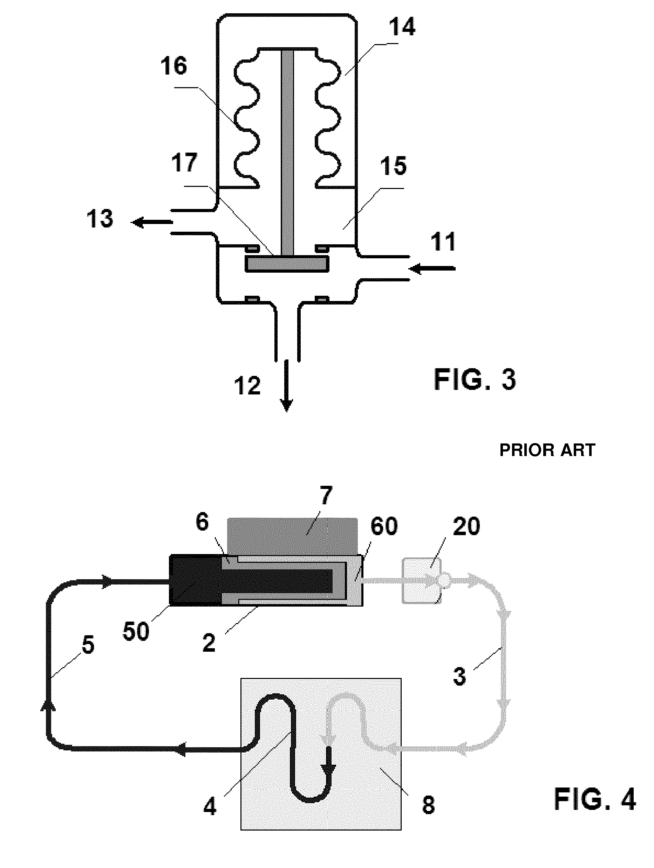

The three-way regulating valve 9 of the heat transfer device of Figure 2 (see Figure 3) comprises one input 11, connected with the evaporator 2 outlet, and two outputs: the first output 12 is connected to the evaporator 2 inlet via the condenser 4 and the liquid line 5, and the second output 13 is connected to the evaporator 2 inlet via the bypass 10 line. The valve 9 comprises two chambers, an upper chamber 14 and a lower chamber 15, which are separated by gastight bellows 16, which are preferably metallic. The upper chamber 14 is not connected with the device working volume and it is usually filled with a predetermined amount of inert gas. The pressure value of this inert gas defines the minimum operational temperature of the evaporator 2. The lower chamber 15 is integrated in the heat transfer device, being usually filled during operation with vapour of the heat transfer device working fluid. The balance of pressures in the upper chamber 14 (inert gas) and in the lower chamber 15 (vapour) governs the direction of the mass vapour flow and the shearing of this flow between the two outputs 12, 13: first output 12 to condenser 4 and second output 13 to the bypass 10 line. The pressure in the device is a function of the temperature since the fluid in the circuit device is always in the saturated state (the two phases, vapour 60 and liquid 50 being in equilibrium). When the temperature of the evaporator 2 is high enough so that the corresponding pressure in the upper chamber 14 is above the pressure of inert gas in said chamber 14, the second output 13 to the bypass 10 line is closed (the stem 17 in the valve 9 is in the upper position) and all mass (heat) flow is directed to the condenser 4. As soon as the temperature of the evaporator 2 lowers to the preset value (inert gas charge level) the pressures in the two chambers 14, 15 are getting close, the stem 17 is moving down (into an intermediate position between the two limiting valve seats) and part of the total vapour mass (heat) flow is coming directly to evaporator 2 inlet via the bypass 10 line. This vapour condenses in the liquid part of the evaporator 2, releasing the heat. This heat is necessary to keep the temperature of the evaporator 2 and the heat source 7 at the set point.

These types of temperature control heat transfer devices with heater 1 (Figure 1) and three-way regulating valves 9 (Figure 2) are usually called two phase heat transfer loops with active or passive control function: in these cases described above (Figures 1 and 2), the heat is applied directly to the liquid part of device evaporator in order to change its conductance, thus effecting a temperature control in the evaporator 2.

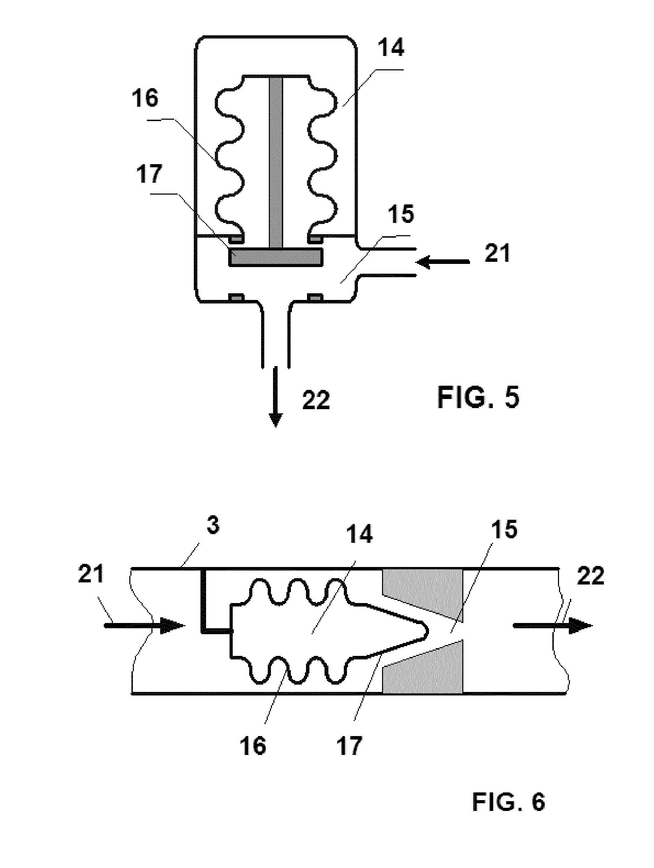

According to the invention, a thermal control device is proposed, comprising a novel method of temperature control in the evaporator 2. The approach of the device of the invention simplifies current design of the three-way regulating valve 9 into a two-way regulating valve 20, eliminating the necessity of a bypass 10 line (see Figure 4). The two-way regulating valve 20 in the device according to the invention comprises only one input 21 and one output 22 (see Figure 5): the input 21 is connected to the evaporator 2 outlet, and the output 22 is connected to the evaporator 2 inlet via the condenser 4 and the liquid transport line 5. This position of the valve 20 (located in the vapour transport line 3) is preferable for situations in which a more precise temperature control is required; however, the valve 20 can be also installed in the liquid transport line 5. In cases where the valve 20 is installed in the liquid transport line 5, the input 21 of the valve 20 is connected to the condenser 4 outlet, and the output 22 of the valve 20 is connected to the evaporator 2 inlet. The other elements are the same as the ones described above for the three-way regulating valve 9. An alternative variant of the two-way regulating valve 20 design, when the valve 20 is fully integrated into the vapour transport line 3, is shown in Figure 6. This alternative design of the valve 20 is also valid in the case in which the mentioned valve 20 is integrated in the liquid transport line 5.

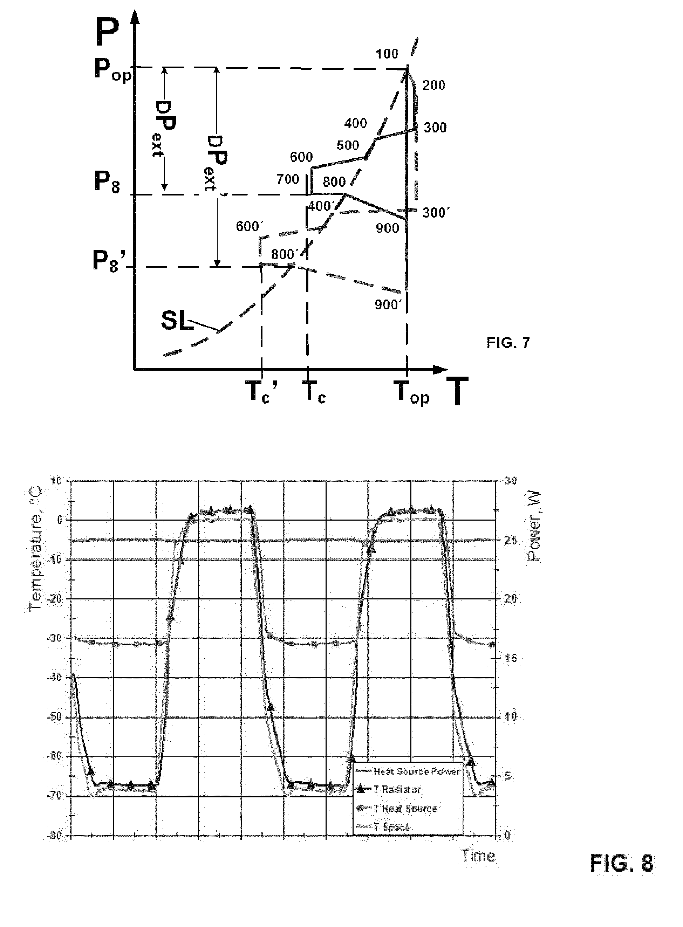

To explain the principle of operation of the two-way regulating valve 20, the pressure-temperature diagram of Figure 7 will be used. The explanation is presented for the case in which the valve 20 is installed in the vapour transport line 3. A similar description can be made for the case in which the valve 20 is installed in the liquid transport line 5.

Since the device of the invention is an evaporating-condensing thermal control device, it operates around the vapour-liquid saturation line SL. Two cycles are shown in Figure 6: one marked with solid lines, and another one with dashed lines. The solid line cycle will be used in order to explain the cycle diagram. At position 100 liquid evaporates from the porous structure 6 in the evaporator 2 and moves to the evaporator 2 outlet (path 100-200). In this step, some vapour overheating can also take place. After that, vapor moves into the vapour line 3 (path 200-300), the temperature of vapor in the vapor line 3 being maintained constant (there is no heat exchange with the ambient) though pressure in the vapor line 3 is reduced. In the condenser 4 (path 300-400-500-600), vapour is cooled up to saturation state (300-400), being condensed (400-500), the liquid condensate being further sub-cooled (500-600). Pressure is reduced on the way of liquid to evaporator 2 (600-700) due to friction losses in the conduit. In the evaporator 2, the vapour phase is usually presented on the liquid side of the porous structure 6, liquid being in equilibrium with vapour (700-800). Liquid is superheated and pressure is further reduced during the filtration through the porous structure (800-900). The cycle is closed at vapor-liquid interface-meniscus where evaporation takes place (900-100). Point 900 in the diagram of Figure 6 corresponds to the liquid phase just under the meniscus, point 100 corresponding to the vapour phase just above the meniscus.

As it is clear from the diagram in Figure 6, the increase of pressure drop of the external loop of the two phase heat transfer loop device (the drop between vapour and liquid sides of the porous structure 6 in the evaporator 2) from dPext to dPext' leads to the corresponding increase temperature difference between the evaporator 2 (Top) and the condenser 4 (from Tc to Tc'). This effect is used for the design of the two-way regulating valve 20 in the thermal control device according to the invention, as it will be further explained.

For instance, at given conditions of the heat sink 8 and of the input power, the known two phase heat transfer loops operate following the solid line marked in the diagram of Figure 6. A reduction in the temperature of the heat sink 8 leads to reducing the operational temperature Top (and corresponding operational pressure Pop) of the two phase heat transfer loop device. However, in a thermal control device according to the invention, comprising a two-way regulating valve 20 in the device circuit, this is not possible to happen. In a thermal control device according to the invention, if the operational pressure in the device becomes less than the backpressure of the inert gas in the upper chamber 14 of the two-way regulating valve 20 (Figure 5), the stem 17 of valve 20 will close the vapour line 3 and circulation will be totally stopped through the two-way regulating valve 20 in the thermal control device. In a real situation, the stem 17 in the two-way regulating valve 20 will go down and close part of the cross section in the first output 12 of the mentioned valve 20 (see reference 12 in Figure 5 and reference 900 in the diagram of Figure 6). This means that the pressure drop in the vapour line 3 will rise (from 200-300 in the solid line of Figure 6 to 200-300' in the dashed line of Figure 6); consequently, the total pressure drop (from 100-900 to 100-900') will also increase. This will force the conductance of the thermal control device to degrade, such that the temperature control of the thermal control device is achieved: the change of the temperature in the heat sink 8 does not cause the reduction of the temperature of the evaporator 2. The introduction of additional hydraulic resistance in the vapour line 3 finally leads to the increase of the parasitic heat leak from the external vapour part of the porous structure 6 to the internal liquid part of the porous structure 6.

Therefore, as it has been explained, the two-way regulating valve 20 in the thermal control device of the invention plays the role of automatically adjusting the hydraulic resistance in the vapour line 3, keeping the operational temperature of the device Top constant, independently from the temperature in the condenser 4.

Preferably, according to the invention, the two-way regulating valve 20 is located in the vapour line 3 of the thermal control device, thus varying the hydraulic resistance of said vapour line 3. However, the two-way regulating valve 20 can also be located in the liquid line 5 of the thermal control device, thus varying the hydraulic resistance of the liquid line 5. In this case (valve 20 installed in the liquid transport line 5), the temperature of the inert gas in the upper part 14 of the valve 20 can vary with the temperature of the condenser 4, possibly leading to a less precise temperature control as that in the system with the valve 20 installed in the vapor transport line 3, since the temperature of vapor and consequently of the inert gas in the valve 20 are practically constant during the regulation.

The valve 20, as it is described above, is a passive control element having a predetermined regulating temperature by the inert gas pressure in the upper chamber 14; however, a further heater on the body of the valve 20 can be installed, giving the possibility to change the set point (predetermined regulating temperature) during the device operation, therefore effecting an active control of the evaporator 2 operation temperature Top. Besides, if the mentioned set-point in the valve 20 has to be changed in a wide range, the valve 20 can be charged with a two-phase fluid instead of an inert gas.

The example of the thermal control device operation is shown on Figure 8, showing experimental temperature data of the device of the invention, operating with temperature regulation set point at -32 °C. The experimentally measured values of temperatures of the thermal control device for condenser (T radiator), evaporator (T heat source) and ambient media (T space) are presented as a function of time. The device was filled with propylene as a working liquid and the regulating valve was charged by 2.3 Bar of argon to keep regulating temperature at -32°C. Ambient temperature has been varied during the experiment from - 70°C to 0 °C twice. Power 25 W has been constantly applied to the evaporator of the thermal control device by heat source. As it is clear from the graph the regulating valve did not allow the temperature of the heat source falling down below the set point of -32°C.

Although the present invention has been fully described in connection with preferred embodiments, it is evident that modifications may be introduced within the scope thereof, not considering this as limited by these embodiments, but by the contents of the following claims.

## Claims

1. Thermal control device for controlling the temperature of a heat source (7) by means of transferring heat from the heat source (7) to a heat sink (8) by means of the circulation of a fluid in the device, said device comprising an evaporator (2) collecting heat from the heat source (7), a condenser (4) rejecting heat to the heat sink (8), and transport lines (3, 5) connecting the evaporator (2) and the condenser (4), the fluid flowing through said transport lines (3, 5), wherein the device further comprises a valve (20) located in one of the transport lines (3, 5), said valve (20) opening and closing the flow of fluid in the transport line (3, 5) modifying the hydraulic resistance of said transport line (3, 5), the pressure drop in the circuit of transport lines (3,5) - valve (20) - condenser (4) being such that it enables to maintain the evaporator operation temperature (Top) substantially within a predetermined value, independent on the condenser temperature (Tc), **characterized in that** the valve (20) further comprises a heater for effecting an active control of the evaporator operation temperature (Top).

2. Thermal control device according to claim 1, wherein the valve (20) is located in a vapour transport line (3) of the device, the evaporator operation temperature (Top) being maintained substantially constant.

3. Thermal control device according to claim 2, wherein the valve (20) comprises only one input (21) and only one output (22), the input (21) being connected to the outlet of the evaporator (2), and the output (22) being connected to the inlet of the evaporator (2) via the condenser (4).

4. Thermal control device according to claim 3, wherein the input (21) and the output (22) are connected in the valve (20) by means of a lower chamber (15) containing vapour.

5. Thermal control device according to any of the previous claims, wherein the valve (20) further comprises an upper chamber (14) comprising an inert gas or two-phase fluid.

6. Thermal control device according to claim 1, wherein the valve (20) is located in a liquid transport line (5) of the device.

## Patentansprüche

1. Thermische Steuervorrichtung zur Steuerung der Temperatur einer Wärmequelle (7) mittels Wärmeübertragung von der Wärmequelle (7) zu einer Wärmesenke (8) mittels der Zirkulation eines Fluids in der Vorrichtung, wobei die Vorrichtung einen Verdampfer (2), der Wärme von der Wärmequelle (7) sammelt, einen Kondensator (4), der Wärme zu der Wärmesenke (8) abführt, und Transportleitungen (3, 5) aufweist, die den Verdampfer (2) und den Kondensator (4) verbinden, wobei das Fluid durch die Transportleitungen (3, 5) strömt, wobei die Vorrichtung weiterhin ein Ventil (20) aufweist, das in einer der Transportleitungen (3, 5) angeordnet ist, wobei das Ventil (20) den Fluidstrom in der Transportleitung (3, 5) öffnet und schließt und den Hydraulikwiderstand der Transportleitung (3, 5) modifiziert, wobei der Druckabfall in dem Kreislauf aus Transportleitungen (3, 5) - Ventil (20) - Kondensator (4) derart ist, dass die Verdampferbetriebstemperatur (Top) unabhängig von der Kondensatortemperatur (Tc) im Wesentlichen innerhalb eines vorbestimmten Werts gehalten werden kann, **dadurch gekennzeichnet, dass** das Ventil (20) weiterhin eine Heizeinrichtung zum Bewirken einer aktiven Steuerung der Verdampferbetriebstemperatur (Top) aufweist.

2. Thermische Steuervorrichtung nach Anspruch 1, bei welcher das Ventil (20) in einer Dampftransportleitung (3) der Vorrichtung angeordnet ist, wobei die Verdampferbetriebstemperatur (Top) im Wesentlichen konstant gehalten wird.

3. Thermische Steuervorrichtung nach Anspruch 2, bei welcher das Ventil (20) nur einen Eingang (21) und nur einen Ausgang (22) aufweist, wobei der Eingang (21) mit dem Auslass des Verdampfers (2) und der Ausgang (22) über den Kondensator (4) mit dem Einlass des Verdampfers (2) verbunden ist.

4. Thermische Steuervorrichtung nach Anspruch 3, bei welcher der Eingang (21) und der Ausgang (22) in dem Ventil (20) mittels einer Dampf enthaltenden unteren Kammer (15) verbunden sind.

5. Thermische Steuervorrichtung nach irgendeinem der vorhergehenden Ansprüche, bei welcher das Ventil (20) weiterhin eine obere Kammer (14) mit einem Inertgas oder Zwei-Phasen-Fluid aufweist.

6. Thermische Steuervorrichtung nach Anspruch 1, bei welcher das Ventil (20) in einer Flüssigkeitstransportleitung (5) der Vorrichtung angeordnet ist.

## Revendications

1. Dispositif de régulation thermique pour réguler la température d'une source de chaleur (7) par un transfert de chaleur de la source de chaleur (7) vers un dissipateur de chaleur (8) au moyen d'une circulation de fluide dans le dispositif, ledit dispositif comprenant un évaporateur (2) collectant la chaleur de la source de chaleur (7), un condenseur (4) rejetant la chaleur vers le dissipateur de chaleur (8), et des conduites de transport (3, 5) reliant l'évaporateur (2) et le condenseur (4), le fluide circulant à travers lesdites conduites de transport (3, 5), dans lequel le dispositif comprend en outre une vanne (20) située dans l'une des conduites de transport (3, 5), ladite vanne (20) ouvrant et fermant la circulation du fluide dans la conduite de transport (3, 5), modifiant la résistance hydraulique de ladite conduite de transport (3, 5), la chute de pression dans le circuit des conduites de transport (3, 5), - vanne (20) - condenseur (4) étant telle qu'elle permet de maintenir la température d'opération de l'évaporateur (Top) sensiblement à une valeur prédéterminée, indépendante de la température du condensateur (Tc), **caractérisé en ce que** la vanne (20) comprend en outre un réchauffeur pour effectuer une régulation active de la température d'opération de l'évaporateur (Top).

2. Dispositif de régulation thermique selon la revendication 1, dans lequel la vanne (20) est située dans une conduite de transport de vapeur (3) du dispositif, la température d'opération de l'évaporateur (Top) étant maintenue sensiblement constante.

3. Dispositif de régulation thermique selon la revendication 2, dans lequel la vanne (20) comprend une seule entrée (21) et une seule sortie (22), l'entrée (21) étant reliée à la sortie de l'évaporateur (2), et la sortie (22) étant reliée à l'entrée de l'évaporateur (2) par l'intermédiaire du condenseur (4).

4. Dispositif de régulation thermique selon la revendication 3, dans lequel l'entrée (21) et la sortie (22) sont reliées dans la vanne (20) au moyen d'une chambre inférieure (15) contenant de la vapeur.

5. Dispositif de régulation thermique selon l'une quelconque des revendications précédentes, dans lequel la vanne (20) comprend en outre une chambre supérieure (14) comprenant un gaz inerte ou un liquide diphasique.

6. Dispositif de régulation thermique selon la revendication 1, dans lequel la vanne (20) est située dans une conduite de transport de liquide (5) du dispositif.
